# EUROPÄISCHE PATENTSCHRIFT

(11) **EP 3 645 762 B1**
(45) Veröffentlichungstag und Bekanntmachung des Hinweises auf die Patenterteilung: **03.03.2021**
(21) Anmeldenummer: 18733235.8
(22) Anmeldetag: 20.06.2018
(51) Int. Cl.: C22C 38/02, H01M 8/021, C22C 38/00, C22C 38/38, C22C 38/28, C22C 38/20, C22C 38/06, C22C 38/04, H01M 8/124

(54) **STAHLLEGIERUNG MIT VERBESSERTER KORROSIONSBESTÄNDIGKEIT BEI HOCHTEMPERATURBEANSPRUCHUNG UND VERFAHREN ZUR HERSTELLUNG VON STAHLBAND AUS DIESER STAHLLEGIERUNG**
STEEL ALLOY HAVING IMPROVED CORROSION RESISTANCE UNDER HIGH-TEMPERATURE LOADING AND METHOD FOR PRODUCING STEEL STRIP FROM SAID STEEL ALLOY
ALLIAGE D'ACIER PRÉSENTANT UNE MEILLEURE RÉSISTANCE À LA CORROSION LORSQU'IL EST SOUMIS À DE HAUTES TEMPÉRATURES ET PROCÉDÉ DE FABRICATION D'UNE BANDE D'ACIER À PARTIR DE CET ALLIAGE D'ACIER

(30) Priorität: 27.06.2017 DE 102017114262
(43) Veröffentlichungstag der Anmeldung: 06.05.2020
(73) Patentinhaber: Salzgitter Flachstahl GmbH, 38239 Salzgitter (DE)
(72) Erfinder: GEORGEOU, Zacharias, 47251 Duisburg (DE); SPIEGEL, Michael, 47251 Duisburg (DE); REDENIUS, Alexander, 47251 Duisburg (DE); EVERTZ, Thomas, 47251 Duisburg (DE)
(74) Vertreter: Moser Götze & Partner Patentanwälte mbB
(86) Internationale Anmeldenummer: PCT/EP2018/066382
(87) Internationale Veröffentlichungsnummer: WO 2019/002041

(56) Entgegenhaltungen:
- EP-A1- 0 411 061
- EP-A1- 1 827 720
- FR-A1- 2 634 221
- JP-A- H03 138 334
- US-A- 3 148 979
- US-A1- 2008 226 490

## Beschreibung

Die Erfindung betrifft eine Stahllegierung mit verbesserter Korrosionsbeständigkeit bei Hochtemperaturbeanspruchung gemäß Anspruch 1. Des Weiteren betrifft die Erfindung ein Verfahren zur Herstellung von Stahlband aus dieser Stahllegierung gemäß Anspruch 4 sowie eine vorteilhafte Verwendung dieser Stahllegierung nach Anspruch 5 sowie aus dieser Stahllegierung hergestellte Halbzeuge oder Bauteile nach Anspruch 9.

Insbesondere betrifft die Erfindung Stahllegierungen für Temperaturbeanspruchungen im Bereich von etwa 300 bis 1200°C, wobei die Stahllegierungen als Band, Blech, nahtlose oder geschweißte Rohre, Halbzeuge oder fertige Bauteile vorliegen können und zum Beispiel für den Betrieb, insbesondere in oxidierender Atmosphäre, bei hohen Temperaturen eingesetzt werden. Zudem werden diese Stahllegierungen in Bereichen der chemischen Industrie verwendet, insbesondere in Anlagen für Medien mit einem Betrieb bei hohen Temperaturen und hoher Kohlenstoffaktivität, zum Beispiel sogenannten Äthylencrackern.

Der Bereich der Wasser-Elektrolyse wird weltweit und im Speziellen in Deutschland massiv an Bedeutung gewinnen. Durch den geplanten Ausstieg aus fossilen Energieträgern, wie Kohle und Erdgas, kann Energie für viele Prozesse stofflich nur als Wasserstoff zugeführt werden.

Die Hochtemperaturelektrolyse (HTE) stellt eine interessante, da hocheffiziente Technologie zur Herstellung von Wasserstoff dar. Sie bietet im Vergleich zu den anderen Technologien, wie die alkalische und PEM (Protonen-Austausch-Membran)-Elektrolyse, Vorteile im Wirkungsgrad, da sich Abwärmepotenziale effizient mit einbinden lassen.

Als kritisch sind hier allerdings die hohen Korrosionsbeanspruchungen bei den hohen Einsatztemperaturen zu sehen, die die Lebensdauer der Stahlkomponenten deutlich beeinflussen.

Korrosionsbeanspruchte Bauteile, die hohen Temperaturbeanspruchungen ausgesetzt sind, werden daher üblicherweise in Edelstahl-Rostfrei-Stahlsorten ausgelegt. Zum Einsatz kommen ferritische Chromstähle oder austenitische CrNi-Stähle, zu denen ggf. weitere Elemente (z.B. Mo, Ti, Nb, V, Mn) zulegiert werden, um medienspezifisch Korrosionsschutz zu erreichen. Für Hochtemperaturanwendungen kommen zudem metallische Werkstoffe in Betracht, deren Anteil an Eisen unter 50% liegen kann (z.B. Ni-Basislegierungen).

Ferritische Chromstähle mit höheren Al-Legierungsanteilen weisen eine Temperaturbeständigkeit bis 1000°C oder 1200°C auf. Die Legierungen enthalten nur geringe Massenanteile Mangan (<0,5 Gew.-%). Die neueste Entwicklung sind ferritische Stähle für den Einsatz als Interkonnektorplatten in Brennstoffzellen bzw. SOEC (Solid Oxide Electrolyser Cell), die sogenannten CroFer bzw. CroFer APU Legierungen mit etwa 20 bis 24 Gew.-% Chrom. Die Werkstoffe müssen jedoch aufgrund des hohen Chromgehaltes und der damit verbundenen Chromverdampfung im Betrieb zusätzlich beschichtet werden.

Die vorbekannten Werkstoffe sind üblicherweise hochlegiert und somit kostenintensiv. Als Beispiel für Stahllegierungen aus ferritischem Chromstahl für Hochtemperaturanwendungen sei hier die Offenlegungsschrift WO 03/029505 A1 genannt. Offenbart wird hier eine Legierung, bestehend aus in Gew.-%: C </=0,05, Cr: 16,0-24,0, Ni mehr als 1,0-15,0, Al: 4,5-12,0, Mo+W </=4,0, Mn </=1,0, Si </=2,0, Zr+Hf </=0, 1, REM </=0,1, N </=0,05 Rest Eisen und unvermeidbare Stahlverunreinigungen.

Bekannte Stahlsorten, die zum Beispiel für Heizleiter eingesetzt werden und bis zu 1400°C temperaturbeständig sind, basieren auf Konzepten, in denen neben Ni, ebenfalls die Elemente Al, Cr und Si legiert werden, um in atmosphärischer Umgebung (Luft) eine fortschreitende Verzunderung/Oxidation auch bei wiederholter Erwärmung und Abkühlung zu unterdrücken. Der Schutzmechanismus ist in Kombination mit weiteren Medien, insbesondere Flüssigkeiten, allerdings nicht mehr ausreichend gegeben.

Neben Ni-Cu- sowie Ni-Cr-Legierungen werden für Heizleiter auch bereits Fe-Al-Legierungen mit ca. 5 Gew.-% Al (z.B. mit 25 Gew.-% Cr und 5 Gew.-% Al) eingesetzt, um eine gezielte Oxidbildung (Aluminiumalphaoxid) zu forcieren. Die ferritischen und insbesondere hoch chromhaltigen CroFer-Werkstoffe weisen aber eine erhöhte Abdampfrate des Chromoxids insbesondere in feuchten Atmosphären auf, weshalb hier Beschichtungen notwendig sind und nach langer Laufzeit eine "Vergiftung" der Brennstoffzellenelektroden durch Abscheidung von Cr₂O₃ stattfindet. Dadurch wird die elektrochemische Aktivität der Elektroden zerstört, was einen Leistungseinbruch zur Folge hat.

Die internationale Patentanmeldung WO 90/00630 A1 beschreibt Stahllegierungen mit verbesserter Korrisionsbeständigkeit bei Hochtemperaturbeanspruchung beispielsweise für Stahlrohre und Stahlbleche usw. Insbesondere wird dort eine Legierung Nr. 822 beschrieben, die 27,1 Gew.-% Mn, 4,9 Gew.-% Al, 0,95 Gew.-% C und 6,5 Gew.-% Cr aufweist. Auch wird allgemein zu den Stahllegierungen ein Cu-Gehalt bis 4 Gew.-% und ein Si-Gehalt bis 2,5 Gew.-% angegeben. Eine Beschreibung einer oxidischen Deckschicht ist nicht enthalten.

Aus der Offenlegungsschrift US 2008/0226490 A1 ist eine Stahllegierung TW185568 bekannt, die 26 bis 28 Gew.-% Mn, 6,5 bis 8 Gew.-% Al, 5 bis 6 Gew.-% Cr, 0,9 bis 1,1 Gew.-% C, 0,2 bis 1,5 Gew.-% Si, 1,0 bis 1,2 Gew.-% Mo, 0,9 bis 1,1 Gew.-% Cu und 0,02 bis 0,04 Gew.-% Nb enthält. Diese Legierung erfüllt auch die Bedingung 12 < Cr + 2*Al + 3*Si < 24.

Des Weiteren ist in der internationalen Patentanmeldung WO 2006/066551 A1 bereits beschrieben, dass eine horizontale Bandgießtechnologie für ein Fe-Mn-Si-Al-Legierungskonzept geeignet ist.

Der Erfindung liegt daher die Aufgabe zugrunde, eine Stahllegierung mit verbesserter Korrosionsbeständigkeit für Hochtemperaturbeanspruchungen von 300°C bis zu 1200°C, insbesondere 800°C bis 1200°C anzugeben, die kostengünstiger als bekannte hochlegierte Stähle für diesen Einsatzbereich ist und trotzdem eine vergleichbare oder sogar verbesserte Korrosionsbeständigkeit im Betrieb aufweist. Des Weiteren soll ein Verfahren zur Herstellung von Stahlbändern aus dieser Stahllegierung sowie vorteilhaften Anwendungsgebiete angegeben werden.

Diese Aufgabe wird durch eine Stahllegierung gemäß Patentanspruch 1 gelöst.

Vorteilhafte Weiterentwicklungen sind Gegenstand von Unteransprüchen. Nach der Lehre der Erfindung weist der Stahl folgende Legierungszusammensetzung in Gew.-% auf:
Stahllegierung mit verbesserter Korrosionsbeständigkeit bei Hochtemperaturbeanspruchung für Einsatztemperaturen von 300°C bis 1200°C, insbesondere 800°C bis 1200°C, mit folgender chemischer Zusammensetzung in Gew.-%:
   C: > 0,01 bis ≤ 1,0
   Al: 3,0 bis 12,0
   Cr: 2,0 bis 15,0
   Mn: 5,0 bis 30,0
   Si: 0,10 bis 3,0
   Cu: 0,001 bis 2,5
   Ni: 0,001 bis 5,0
   S: bis 0,010
   P: bis 0,010
   N: 0,001 bis 0,050
   B: 0,00005 bis 0,0250
   Mo: 0,01 bis 5,00
   mit: 12 < Cr + 2*Al+3*Si < 24
sowie mindestens eines der Elemente Ti, V und Nb mit folgenden Gehalten in Gew.-% mindestens stöchiometrisch zu dem vorliegenden Gehalt an N:
   Ti: 0,01 bis 1,0
   V: 0,01 bis 1,0
   Nb:0,01 bis 1,0

Rest Eisen mit erschmelzungsbedingten Verunreinigungen sowie optionaler Zulegierung mindestens eines der seltenen Erde Elemente in Gew.-%: Y: max. 0,1, La: max. 0,1, Ce: max. 0,1 oder der Elemente Hf: max. 0,1, Sr: max. 0,1 und Zr: max. 0,1 mit einem Mindestgehalt der Elemente einzeln oder in Kombination von 0,01 Gew.-%.

Der erfindungsgemäße Stahl weist gegenüber bekannten hochlegierten Stählen erhebliche Kostenvorteile bei gleichen oder sogar verbesserten Korrosionseigenschaften bei Hochtemperaturbeanspruchung auf.
Bereits geringe Massenanteile seltener Erden (rare earth), wie Yttrium, Lanthan oder Cer sowie der Elemente Hafnium, Strontium oder Zirkon, bewirken eine erhebliche Verbesserung sowohl der statischen, als auch der zyklischen Adhäsion der überwiegend aus Al₂O³ bestehenden oxidischen Deckschicht. Diese Deckschicht weist eine Dicke von mindestens 0,1 µm auf.

Erfindungsgemäße Stahllegierungen mit Legierungselementen aus dem System Al-Cr-Mn zeichnen sich darüber hinaus durch eine Deckschichtbildung (mit u.a. Anteilen an Oxiden der Elemente Al, Si, Cr) aus, die die Korrosion (auch bei hohen Temperaturen) und die Verzunderungsgeschwindigkeit stark absenken, so dass in vorteilhafter Weise im Regelfall auf eine ansonsten notwendige zusätzliche Beschichtung der Bauteile verzichtet werden kann.

Die sich bildende Deckschicht ist dauerhaft und heilt sich bei mechanischer Beschädigung selbst aus. Die chemische Zusammensetzung grenzt sich gegen bestehende Heizleiterlegierungen durch einen erheblich höheren Massenanteil Mn sowie zulässigen höheren C-Masseanteilen ab. Je nach Höhe des Mangangehaltes besteht das Gefüge im Einsatz nicht nur aus Ferrit, sondern liegt zweiphasig aus Ferrit und Austenit, mit Ausscheidungen vor und weist somit vorteilhaft einen TRIP/TWIP-Effekt auf. Die Stähle der AlCroMaSt-Familie zeichnen sich darüber hinaus durch hohe Festigkeiten (Rp_{0,2} und Rₘ) aus. Bei hohen Temperaturen (>800°C bis 1200°C) verlieren diese Stahlsorten, im Vergleich zu Baustählen, nur wenig an Festigkeit.

Die chemische Zusammensetzung der erfindungsgemäßen Legierung ermöglicht durch die Kombination der Legierungselemente, insbesondere von Si, Al und Cr in den angegebenen Spannen, eine Deckschichtbildung unter den Betriebsbedingungen oder durch eine Konditionierung vor dem Einsatz im Betrieb.

Die Deckschicht kann vor dem Einsatz durch Glühung in geeigneter Atmosphäre, beispielsweise durch Sauerstoff, Stickstoff oder andere so konditioniert werden, dass Schichten, z.B. Oxide oder Nitride, oder Kombinationen daraus gebildet werden. Die Glühung kann dabei am Vormaterial, Bauteil oder direkt im endmontierten Zustand, erfolgen. Vorteilhafte Glühtemperaturen liegen zwischen 800°C und 900°C.

Dabei unterstützen seltene Erden die Bildung besonders stabiler oxidischer Schichten bereits in geringen Massenanteilen.

Bei den durchgeführten Untersuchungen hat sich herausgestellt, dass zur Bildung geschlossener oxidischer Deckschichten auf Halbzeugen oder Bauteilen eine Kombination der Elemente Si, Al und Cr in den Grenzen 12 < Cr + 2*Al + 3*Si < 24 Gew.-% notwendig ist. Der chemische Aufbau und die Dicke der Oxidschicht ist dabei unmittelbar von der chemischen Zusammensetzung des Stahls abhängig. Kombinationen von Cr und Al befördern die Bildung von Al₂O₃ und Cr₂O₃ Schichten und verhindern innere Oxidation. Mn führt zur Bildung von Spinellphasen und bewirkt vorteilhaft für den beschriebenen Anwendungsbereich eine hohe elektrische Leitfähigkeit der Deckschicht.

Halbzeuge oder Bauteile, hergestellt aus einer erfindungsgemäßen Stahllegierung, weisen demzufolge eine oxidische Deckschicht mit hoher Zunderbeständigkeit, bestehend aus Oxiden mindestens der Elemente Al, Si, Cr auch in Kombination mit Elementen der seltenen Erden und Mangan auf, mit denen Einfluss auf die Leitfähigkeit (elektrisch, thermisch) genommen werden kann. Darüber hinaus bildet sich bei Beschädigungen der Deckschicht in einer entsprechenden Atmosphäre auch eine neue Deckschicht heraus (Selbstheilungs-Effekt).

Die hohen, erforderlichen Elementgehalte an Cr, Al und Si bewirken eine schlechte Warm- und Kaltverformbarkeit, beispielsweise durch Walzen. Zur Verbesserung der Umformbarkeit wird daher Mangan in Gewichtsanteilen von 5 bis 30% zulegiert.

Die bei den bekannten Stählen für den betrachteten Einsatzzweck notwendige Zugabe von mindestens 16 Gew.-% oder sogar über 20 Gew.-% Chrom zur Erreichung einer ausreichenden Korrosionsbeständigkeit, kann erfindungsgemäß auf maximal 15 Gew.-% Chrom und deutlich darunter abgesenkt werden.

Erreicht werden kann dies durch die erfindungsgemäße Zugabe von Aluminium in den angegeben Gehalten von 3 bis 12 Gew.-% und Silizium in Gehalten von 0,10 bis 3,00 Gew.-%, wobei für den Summengehalt aus 12 < Cr + 2*Al+3*Si < 24 die angegebenen Grenzen einzuhalten sind. Damit kann der Chrom-Gehalt sogar auf Werte von 2 bis 15 Gew.-% abgesenkt werden und trotzdem eine hervorragende Korrosionsbeständigkeit bei hohen Einsatztemperaturen erreicht werden. Zudem werden die Herstellkosten durch den deutlich verringerten Cr-Gehalt und dessen Kompensation durch wesentlich preisgünstigere Legierungselemente Al und Si deutlich gesenkt.

Die Korngröße kann durch die Zugabe von Elementen auch gerade beim Einsatz bei höheren Betriebstemperaturen stabilisiert werden, die die Mobilität von Korngrenzen durch "pinning-Effekte" behindert. Dazu gehören insbesondere Ausscheidungen mit Mikrolegierungselementen, wie Ti, Nb oder V in Kombinationen mit C oder N oder B oder einer Kombination daraus in der allgemeinen Form (Ti, Nb, V)x(C, N, B)y. Bei der Stahlherstellung hängt die konkrete Zulegierung mindestens eines der Mikrolegierungselemente dabei vom aktuellen Stickstoffgehalt der Stahlschmelze ab.

Bereits geringe Anteile an Ti, Nb oder V können zur Verbesserung der Alterungsbeständigkeit durch das Abbinden von Stickstoff beitragen. Die Zugabe dieser Elemente erfolgt daher immer mindestens stöchiometrisch zu dem vorliegenden Gehalt an Stickstoff. Die Wahl eines der drei Elemente hängt zudem vom Temperaturbereich ab, in dem der Werkstoff eingesetzt wird, da hiervon die Stabilität der Ausscheidungen beeinflusst wird. V wird eher für niedrigere Temperaturbereiche eingesetzt, während Ti oder Nb für höhere Temperaturbereiche eingesetzt wird.

Das erfindungsgemäße Legierungskonzept auf Basis Fe-Mn-Cr-Al (Si) zeichnet sich durch die günstige Wechselwirkung der Elemente Cr, Si und Al zur Bildung einer passivierenden Oxidschicht aus. Die zur Erstellung nicht rostender Stähle für den Einsatz bei hohen Temperaturen notwendige Zugabe von Cr reduziert sich von mindestens 16% bei den bekannten Stählen auf 2 bis 15 Gew.-% abhängig von der erfindungsgemäßen Zugabe von Al und Si, so dass auf einen zusätzlichen Korrosionsschutz wie beispielsweise eine Beschichtung weitestgehend verzichtet werden kann. Durch die erfindungsgemäße Zugabe von Mo kann durch Karbidbildung die Festigkeit des Materials zusätzlich gesteigert werden. Die Zulegierung der Elemente P und B erhöht durch eine Korngrenzenbelegung die Resistenz gegenüber Wasserstoffversprödung.

Durch die Zugabe von Mn in den vorgegebenen Grenzen wird eine ausgezeichnete Umformbarkeit erreicht, wodurch die Zugabe des knappen und somit teuren Nickels deutlich reduziert werden kann. Insbesondere die reduzierte Zugabe von Chrom auf bis 2 Gew.-% und Nickel auf bis zu 0,001 Gew.-% als Legierungselement ermöglicht die Herstellung eines Stahles, der nicht nur in den Eigenschaften (Korrosionsbeständigkeit, Umformbarkeit etc.) den Stand der Technik übertrifft, sondern der zudem auch äußerst kostengünstig herstellbar ist.

Das große Umformvermögen im Vergleich zu den für diesen Anwendungsbereich bekannten Stählen, ermöglicht auch komplizierte Umformoperationen, für Bauteilgeometrien, die fallweise ansonsten notwendige Schweißoperationen überflüssig machen.

Durch die Zugabe von Silizium in der erfindungsgemäßen Spannbreite kann die Festigkeit und Verschleißfestigkeit sowie die Zunderbeständigkeit erhöht werden, was diese Stahllegierung ebenfalls für den Einsatz in Motor- und Abgaskomponenten prädestiniert.

Vorteilhafte Stahllegierungen weisen neben den anderen Legierungselementen gemäß Anspruch 2 folgende Gehalte in Gew.-% auf:
C: 0,05 bis 0,6
Al: 6,0 bis 12,0
Cr: 5,0 bis 15,0
oder gemäß Anspruch 3:
C: 0,05 bis 0,6
Al: 4,0 bis 10,0
Cr: 2,0 bis 10,0
Mn: 10,0 bis 25,0
Si: 0,30 bis 2,00

Das neue Legierungskonzept Fe-Mn-Cr-Al (Si) ermöglicht aufgrund günstigerer Legierungselemente eine besonders wirtschaftlich herzustellende Stahllegierung für den Einsatz bei hohen Temperaturen von bis zu 1200°C überall dort, wo eine hohe Anforderung an die Korrosionsbeständigkeit gestellt wird.

Durch die erfindungsgemäße Legierungszusammensetzung der neuen Stahllegierung werden Anwendungen im Bereich der Energieerzeugung und der chemischen Industrie oder im Ofenbau möglich, insbesondere vorteilhaft aber für Hochtemperaturelektrolysezellen oder Hochtemperaturbrennstoffzellen sowie für Interkonnektorplatten bei der HTE.

Die Adhäsion der passivierenden Al₂O₃-Shicht lässt sich vorteilhaft durch Hinzulegieren geringer Massenanteile (≤ 0,10 Gew.-%) an reaktiven seltenen Erden Elementen wie z. B. Y, La, Ce oder den Elementen Hf, Sr oder Zr wesentlich erhöhen, so dass die vorgeschlagene Fe-Mn-Cr-Al (Si)-Legierung über sehr gute isotherme und zyklische Oxidationsbeständigkeit verfügt und damit vorteilhaft für temperaturbeanspruchte Bauteile bis etwa 1200°C eingesetzt werden kann. Für die Wirksamkeit ist eine Zugabe dieser Elemente einzeln oder in Kombination von mindestens 0,01 Gew.-% erforderlich.

Zudem ist für einen Einsatz in der Hochtemperaturelektrolyse- bzw. Brennstoffzelle eine gewisse Leitfähigkeit der sich bildenden Passivschicht erforderlich. Wie sich in Untersuchungen herausgestellt hat, kann die Leitfähigkeit durch geringen Zusatz von seltenen Erden vorteilhaft verbessert werden.

Aluminium steigert die Hochtemperaturbeständigkeit durch erhöhte Zunder- bzw. Oxidationsbeständigkeit und ermöglicht damit eine höhere ertragbare Betriebstemperatur der Komponenten bzw. ihren Einsatz in/mit entsprechend temperierten Medien wie zum Beispiel im Bereich Hochtemperatur-Elektrolyse (HTE) oder Hochtemperatur-Brennstoffzellen.

Allgemein wird bei der Herstellung von Stahlblech als Halbzeug der flüssige Stahl kontinuierlich zu Brammen mit 50 - 400 mm Dicke vergossen und anschließend auf das erforderliche Endmaß, in der Regel etwa 2 - 5 mm, gewalzt. Neben der Energie für das Walzen ist weitere Energie für das Wiedererwärmen des Stahls in Öfen zwischen den Prozessschritten erforderlich. Bei der konventionellen Herstellung des erfindungsgemäßen Stahls mittels Brammenstranggießtechnologie gibt es allerdings erhebliche Probleme qualitativ hochwertige Stahlbleche zu erzeugen. Gründe dafür sind im Wesentlichen Entmischungen der Legierungselemente (Makroseigerung), Bildung von Hohlräumen während der Erstarrung (Lunker), Grobkornbildung sowie die massive Gießpulverkontamination durch die hohen Al-Gehalte.

Als vorteilhaftes Verfahren zur Herstellung von Stahlband aus der erfindungsgemäßen Stahllegierung hat sich das horizontale oder vertikale Bandgießen herausgestellt. Dabei wird zunächst ein Vorband mittels horizontalen oder vertikalen Bandgießens hergestellt, welches anschließend zu einem fertigen Stahlband weiterverarbeitet wird mit mindestens einem Warmwalzschritt und optional nachfolgenden einem oder mehreren Kaltwalzschritten.

Als besonders vorteilhaft hat sich für die erfindungsgemäße Stahllegierung jedoch die Erzeugung mittels horizontaler Bandgießtechnologie herausgestellt, die beispielsweise aus der EP 1 827 720 B1 bekannt ist. Die Herstellung der erfindungsgemäßen Stahllegierung wird durch eine grundlegend geänderte Bandgießtechnologie ermöglicht, bei der der flüssige Stahl direkt in Dicken von 8 bis 15 mm auf ein horizontal mit Gießgeschwindigkeit laufendes Spezialband vergossen und anschließend gewalzt wird. Durch die geringe Gießdicke (endabmessungsnah) sind deutlich kürzere Zeitintervalle zur Einstellung der Temperaturverteilung vor dem direkt angeschlossenen Inline-Walzprozess erforderlich.

Neben diesem Herstellungsverfahren lässt sich die erfindungsgemäße Legierung auch vorteilhaft als Gusswerkstoff, beispielsweise für Bauteile mit komplexer Geometrie, die nicht durch Umformen hergestellt werden können, einsetzen.

Demzufolge lässt sich die erfindungsgemäße Stahllegierung vorteilhaft zur Herstellung von nahtlosen oder geschweißten Stahlrohren, Stahlblechen oder durch Gießen hergestellte Werkstücke verwenden.

Tabelle 1 zeigt die chemische Zusammensetzung der Referenzwerkstoffe AlCroMaSt 1 und 2 mit ähnlicher Zusammensetzung wie die erfindungsgemäße Stahllegierung, und eines weiteren Referenzwerkstoffs Crofer®22APU. Chemische Zusammensetzung (auszugsweise)

**Tabelle 1**

| | Cr | C | Mn | Si | Cu | Al | S | P | Ti | La | Fe |
|---|---|---|---|---|---|---|---|---|---|---|---|
| Referenz (min.) | 20 | | 0,3 | | | | | | 0,03 | 0,04 | |
| Referenz (max.) | 24 | 0,03 | 0,8 | 0,5 | 0,5 | 0,5 | 0,02 | 0,05 | 0,2 | 0,2 | Rest |
| AlCroMaSt 1 | 2 | 0,3 | 23,0 | 0,7 | 0,01 | 9,0 | 0,02 | 0,02 | 0,01 | | Rest |
| AlCroMaSt 2 | 5 | 0,2 | 24,0 | 1,2 | 0,2 | 5,0 | 0,02 | 0,02 | 0,01 | | Rest |

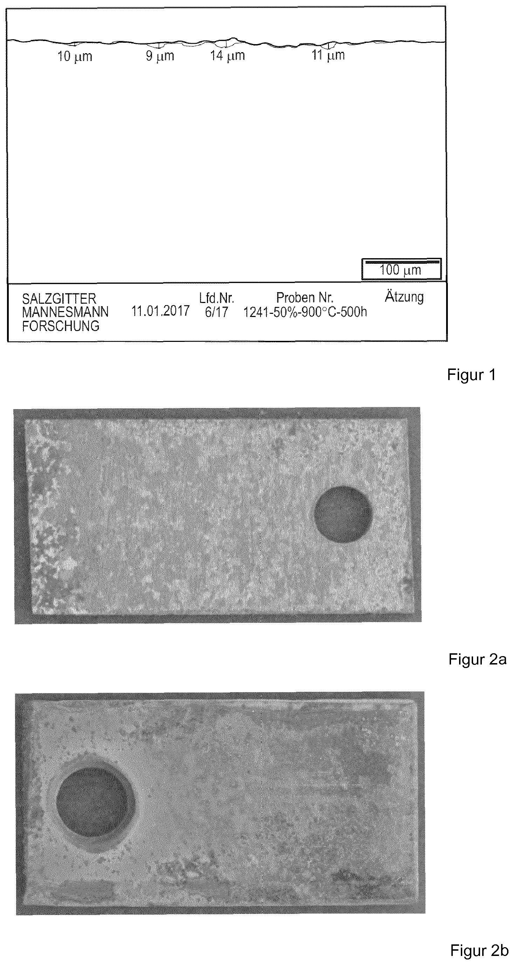

Vorversuche bei 900°C für 500h an Luft zeigten bereits eine sehr geringe Verzunderung von Flachproben (Figur 1). Glühversuche in einer modifizierten Atmosphäre mit CO-CO₂-H₂ bei 900°C für 500h zeigten eine für den Referenzwerkstoff (Figur 2a) geringere Oxidation, als der weitere Referenzwerkstoff (Figur 2b).

## Patentansprüche

1. Stahllegierung mit verbesserter Korrosionsbeständigkeit bei Hochtemperaturbeanspruchung für Einsatztemperaturen von 300°C bis 1200°C, insbesondere 800°C bis 1200°C, mit folgender chemischer Zusammensetzung in Gew.-%:
C: > 0,01 bis 1,0
Al: 3,0 bis 12,0
Cr: 2,0 bis 15,0
Mn: 5,0 bis 30,0
Si: 0,10 bis 3,0
Cu: 0,001 bis 2,5
Ni: 0,001 bis 5,0
S: bis 0,010
P: bis 0,010
N: 0,001 bis 0,050
B: 0,00005 bis 0,0250
Mo: 0,01 bis 5,0
mit: 12 < Cr + 2*Al+3*Si < 24
sowie mindestens eines der Elemente Ti, V und Nb mit folgenden Gehalten in Gew.-% mindestens stöchiometrisch zu dem vorliegenden Gehalt an N:
Ti: 0,01 bis 1,0, V: 0,01 bis 1,0, Nb: 0,01 bis 1,0, Rest Eisen mit erschmelzungsbedingten Verunreinigungen sowie Zulegierung mindestens eines der seltenen Erde Elemente in Gew.-%:
Y: max. 0,1, La: max. 0,1, Ce: max. 0,1 oder der Elemente Hf: max. 0,1, Sr: max. 0,1 und Zr: max. 0,1 mit einem Mindestgehalt der Elemente einzeln oder in Kombination von 0,01 Gew.-%.

2. Stahllegierung nach Anspruch 1 aufweisend in Gew.-%:
C: 0,05 bis 0,6
Al: 6,0 bis 12,0
Cr: 5,0 bis 15,0

3. Stahllegierung nach Anspruch 1 aufweisend in Gew.-%:
C: 0,05 bis 0,6
Al: 4,0 bis 10,0
Cr: 2,0 bis 10,0
Mn: 10,0 bis 25,0
Si: 0,30 bis 2,00

4. Verfahren zur Herstellung von Stahlband aus einer Stahllegierung nach mindestens einem der Ansprüche 1 bis 3, **dadurch gekennzeichnet, dass** zunächst ein Vorband mittels horizontalen oder vertikalen Bandgießens hergestellt wird, welches anschließend zu einem fertigen Stahlband weiterverarbeitet wird mit mindestens einem Warmwalzschritt und optional nachfolgenden einem oder mehreren Kaltwalzschritten.

5. Verwendung einer Stahllegierung mit verbesserter Korrosionsbeständigkeit bei Hochtemperaturbeanspruchung für Einsatztemperaturen von 300°C bis 1200°C, insbesondere 800°C bis 1200°C, nach mindestens einem der Ansprüche 1 bis 3 zur Herstellung von nahtlosen oder geschweißten Stahlrohren, Stahlblechen, Profilen oder durch Gießen hergestellte Werkstücke.

6. Verwendung einer Stahllegierung mit verbesserter Korrosionsbeständigkeit bei Hochtemperaturbeanspruchung für Einsatztemperaturen von 300°C bis 1200°C, insbesondere 800°C bis 1200°C, nach mindestens einem der Ansprüche 1 bis 3 als Werkstoff für Bauteile im Bereich der Energieerzeugung und der chemischen Industrie.

7. Verwendung einer Stahllegierung nach Anspruch 6 für Bauteile von Hochtemperaturelektrolysezellen oder Hochtemperaturbrennstoffzellen.

8. Verwendung einer Stahllegierung nach Anspruch 7 für Interkonnektorplatten und Gehäuseteilen jeweils von Hochtemperaturelektrolysezellen.

9. Halbzeuge oder Bauteile hergestellt aus einer Stahllegierung mit verbesserter Korrosionsbeständigkeit bei Hochtemperaturbeanspruchung für Einsatztemperaturen von 300°C bis 1200°C, insbesondere 800°C bis 1200°C, nach mindestens einem der Ansprüche 1 bis 3, aufweisend eine oxidische Deckschicht mit hoher Zunderbeständigkeit, bestehend aus Oxiden mindestens der Elemente Al und Si und Cr sowie Mn.

10. Halbzeuge oder Bauteile nach Anspruch 9, aufweisend eine Deckschichtdicke von mindestens 0,1 µm.

## Claims

1. Steel alloy having improved corrosion resistance at high-temperature loading for operating temperatures of 300°C to 1200°C, in particular 800°C to 1200°C, having the following chemical composition in wt.%:
C: > 0.01 to 1.0
Al: 3.0 to 12.0
Cr: 2.0 to 15.0
Mn: 5.0 to 30.0
Si: 0.10 to 3.0
Cu: 0.001 to 2.5
Ni: 0.001 to 5.0
S: to 0.010
P: to 0.010
N: 0.001 to 0.050
B: 0.00005 to 0.0250
Mo: 0.01 to 5.0
where: 12 < Cr + 2*Al+3*Si < 24
and at least one of the elements Ti, V and Nb with the following contents in wt.% at least stoichiometrically with respect to the present content of N:
Ti: 0.01 to 1.0, V: 0.01 to 1.0, Nb: 0.01 to 1.0, the remainder being iron with melting-induced impurities and addition by alloying of at least one of the rare earth elements in wt.%:
Y: max. 0.1, La: max. 0.1, Ce: max. 0.1 or the elements Hf: max. 0.1, Sr: max. 0.1 and
Zr: max. 0.1 with a minimum content of the elements individually or in combination of 0.01 wt.%.

2. Steel alloy as claimed in claim 1, comprising in wt.%:
C: 0.05 to 0.6
Al: 6.0 to 12.0
Cr. 5.0 to 15.0.

3. Steel alloy as claimed in claim 1, comprising in wt.%:
C: 0.05 to 0.6
Al: 4.0 to 10.0
Cr: 2.0 to 10.0
Mn: 10.0 to 25.0
Si: 0.30 to 2.00.

4. Method for producing steel strip from a steel alloy as claimed in at least one of claims 1 to 3, **characterised in that** initially a pre-strip is produced by means of horizontal or vertical strip casting, which is then further processed to form a finished steel strip with at least one hot rolling step and optionally subsequent one or several cold rolling steps.

5. Use of a steel alloy having improved corrosion resistance at high-temperature loading for operating temperatures of 300°C to 1200°C, in particular 800°C to 1200°C, as claimed in at least one of claims 1 to 3 for producing seamless or welded steel pipes, steel sheets, profiles or workpieces produced by casting.

6. Use of a steel alloy having improved corrosion resistance at high-temperature loading for operating temperatures of 300°C to 1200°C, in particular 800°C to 1200°C, as claimed in at least one of claims 1 to 3 as a material for components in the field of energy production and in the chemical industry.

7. Use of a steel alloy as claimed in claim 6, for components of high-temperature electrolysis cells or high-temperature fuel cells.

8. Use of a steel alloy as claimed in claim 7 for interconnector plates and housing parts in each case of high-temperature electrolysis cells.

9. Semi-finished products or components produced from a steel alloy having improved corrosion resistance at high-temperature loading for operating temperatures of 300°C to 1200°C, in particular 800°C to 1200°C, as claimed in at least one of claims 1 to 3, comprising an oxidic cover layer having high scaling resistance, consisting of oxides at least of the elements Al and Si and Cr and Mn.

10. Semi-finished products or components as claimed in claim 9, comprising a cover layer thickness of at least 0.1 µm.

## Revendications

1. Alliage d'acier ayant une meilleure résistance à la corrosion à contrainte de température élevée pour des températures d'utilisation de 300 °C à 1200 °C, en particulier de 800 °C à 1200 °C, ledit alliage d'acier ayant la composition chimique suivante en % en poids :
C : > 0,01 à 1,0
Al : 3,0 à 12,0
Cr : 2,0 à 15,0
Mn : 5,0 à 30,0
Si : 0,10 à 3,0
Cu : 0,001 à 2,5
Ni : 0,001 à 5,0
S : jusqu'à 0,010
P : jusqu'à 0,010
N : 0,001 à 0,050
B : 0,00005 à 0,0250
Mo : 0,01 à 5,0
avec : 12<Cr+2*Al+3*Si<24
et au moins un des éléments Ti, V et Nb ayant les teneurs suivantes en % en poids au moins du point de vue stœchiométrique par rapport à la teneur en N :
Ti : 0,01 à 1,0, V : 0,01 à 1,0, Nb : 0, 01 à 1,0, le reste étant du fer avec des impuretés causées par le processus de fusion et l'ajout d'au moins un des éléments de terres rares en % en poids :
Y : 0,1 maximum, La : 0,1 maximum, Ce : 0,1 maximum ou les éléments Hf : 0,1 maximum, Sr : 0,1 maximum et Zr : 0,1 maximum avec une teneur minimale des éléments individuellement ou en combinaison de 0,01 % en poids.

2. Alliage d'acier selon la revendication 1 comprenant, en % en poids :
C : 0,05 à 0,6
Al : 6,0 à 12,0
Cr: 5,0 à 15,0.

3. Alliage d'acier selon la revendication 1 comprenant, en % en poids :
C : 0,05 à 0,6
Al : 4,0 à 10,0
Cr : 2,0 à 10,0
Mn : 10,0 à 25,0
Si : 0,30 à 2,00.

4. Procédé de production d'une bande d'acier à partir d'un alliage d'acier selon l'une au moins des revendications 1 à 3, **caractérisé en ce que** tout d'abord une bande préliminaire est produite au moyen d'une coulée de bande horizontale ou verticale, qui est ensuite soumise à un traitement ultérieur pour obtenir une bande d'acier finie avec au moins une étape de laminage à chaud puis éventuellement une ou plusieurs étapes de laminage à froid.

5. Utilisation d'un alliage d'acier ayant une résistance améliorée à la corrosion sous contrainte à haute température pour des températures d'utilisation de 300 °C à 1200 °C, en particulier de 800 °C à 1200 °C, selon l'une au moins des revendications 1 à 3 pour la production de tubes en acier sans soudure ou soudés, de tôles d'acier, de profilés ou pièces fabriquées par coulée.

6. Utilisation d'un alliage d'acier à résistance améliorée à la corrosion à contrainte de températures élevée pour des températures d'utilisation de 300 °C à 1200 °C, en particulier de 800 °C à 1200 °C, selon l'une au moins des revendications 1 à 3 comme matériau pour composants dans le domaine de la production d'énergie et de l'industrie chimique.

7. Utilisation d'un alliage d'acier selon la revendication 6 pour des composants de cellules d'électrolyse à haute température ou de piles à combustible à haute température.

8. Utilisation d'un alliage d'acier selon la revendication 7 pour des plaques d'interconnexion et des pièces de boîtier de cellules d'électrolyse à haute température.

9. Produits semi-finis ou composants en alliage d'acier à résistance améliorée à la corrosion à contrainte à haute température pour des températures d'utilisation de 300 °C à 1200 °C, en particulier de 800 °C à 1200 °C, selon l'une au moins des revendications 1 à 3, les produits semi-finis comportant une couche de revêtement oxydique à haute résistance à l'oxydation à chaud, constitué d'oxydes au moins des éléments Al et Si et Cr et Mn.

10. Produits semi-finis ou composants selon la revendication 9, ayant une épaisseur de couche de revêtement d'au moins 0,1 µm.
